# EUROPEAN PATENT SPECIFICATION

(11) **EP 2 359 610 B1**
(45) Date of publication and mention of the grant of the patent: **16.10.2013**
(21) Application number: 08875324.9
(22) Date of filing: 17.11.2008
(51) Int. Cl.: H04W 76/02, H04W 60/00

(54) **PROVIDING ACCESS TO A GPRS NETWORK**
BEREITSTELLEN VON ZUGANG ZU EINEM GPRS-NETZWERK
FOURNITURE D'ACCÈS À UN RÉSEAU GPRS

(43) Date of publication of application: 24.08.2011
(73) Proprietor: Telefonaktiebolaget L M Ericsson (PUBL), 164 83 Stockholm (SE)
(72) Inventor: NOLDUS, Rogier, NL-5052 BM Goirle (NL)
(74) Representative: Mohsler, Gabriele
(86) International application number: PCT/EP2008/065662
(87) International publication number: WO 2010/054697

(56) References cited:
- WO-A-99/50974
- WO-A-02/073998

## Description

### Technical field

The present invention relates to providing access for devices to a General Packet Radio Service (GPRS) network.

### Background

Telemetric devices are used for remote measuring and transmitting data, such as measurement information, to a central control unit. Exemplary applications of telemetry are automatic meter reading, patient monitoring, traffic monitoring and control, remote weather stations, resource distribution monitoring.

Typically a telemetric device communicates with the central control unit via a radio interface. GPRS is a technology that may be used for data communication between the telemetric device and the central control unit. GPRS and its third and fourth generation evolution is nowadays considered the leading standard for wireless data communication, making this technology the preferred choice for many system vendors and operators. GPRS is specified for example in 3^{rd} Partnership Project (3GPP) Technical Specification 23.060 version 7.5.0 and in 3GPP TS 44.065, version 7.0.0.

In order to enable a telemetric device to connect to a GPRS network, it must be equipped with GPRS communication capability, i.e. a subscriber identity module (SIM) card and a radio unit for wireless connection. Furthermore the telemetric device must be provided with a subscription with the GPRS network operator. The telemetric device behaves like a normal GPRS subscriber, i.e. it attaches to the GPRS network and establishes a Packet Data Protocol (PDP) context for data communication. A PDP context describes the characteristics of a data session between a device and the GPRS network. It refers to a data record comprising session information for an active GPRS session, for the purpose of exchanging data between said device and a service or application in the internet. The GPRS attach procedure is executed whenever a GPRS enabled device is switched on and needs to inform the network about its presence and capabilities. The GPRS attach procedure is initiated by the device and involves signaling between the device and nodes in a GPRS network, such as the serving GPRS support node (SGSN), home location register (HLR) and equipment identity register (EIR). The GPRS attach procedure constitutes exchange of messages for authentication of the device and the subscription, indicating supported ciphering algorithms and other capabilities of the device, and for performing a location update of the device.

According to the state of the art each telemetric device is treated as an individual GPRS subscriber. Each of the corresponding subscriptions is stored and maintained in a subscriber database, such as the Home Location Register (HLR).

A disadvantage is that the significant increase of the number of subscriptions required for the telemetric devices overloads the resources of the HLR. International Application WO2002/073998 tries to solve the HLR load problem by identifying common attributes valid for a group of subscribers. Each subscriber has its own subscription with user specific part and a reverence to a set of common attributes.

The number of telemetric devices having a GPRS subscription is rapidly growing and so is the number of data transmissions over the GPRS network per telemetric device. Hence, the signaling resulting from the GPRS attach procedure that is executed for each telemetric device puts a high load on the network.

### Summary

It is therefore an object of the invention to provide methods, devices, and computer programs that improve GPRS access to devices.

This object is achieved by the method, device, computer program and a computer-readable medium product as described in the independent claims. Advantageous embodiments are described in the further claims.

In an embodiment a method for providing a device access to a General Packet Radio Service, GPRS, network is disclosed. The GPRS network comprises a control node for controlling the access. The control node receives from a device a service request. The service request comprises a device identifier. The control node obtains a group profile comprising a group identifier identifying a plurality of devices. The control node selects the group profile for serving the device, if the device identifier corresponds to the group identifier. The control node establishes a connection based on the group profile in accordance with the service request.

The embodiments of the invention enable providing a device access to a GPRS network. The control node receives a service request from the device comprising a device identifier. Based on the device identifier the control node selects a group profile comprising a group identifier identifying a plurality of devices. The group profile is valid for the plurality of devices. The group profile is selected by the control node for serving the device if the device identifier corresponds to the group identifier. Now the control node is enabled to establish a connection for the device according to the group profile that is selected based only on the device identifier received in the service request. Hence, no further signaling is required between the device and the GPRS network for attaching the device. The group profile is obtained once by the control node and enables the control node to use the group profile for a plurality of devices that send a service request. Hence no signaling is necessary between the control node and e.g. the HLR and EIR for serving each service request from each individual device, saving valuable network resources. In other words, the GPRS attach procedure known from the state of the art might become obsolete by the embodiments of the invention. Furthermore, since the group profile is valid for a plurality of devices, no individual user profiles need to be maintained for each device in the HLR..

In a further embodiment a control node is disclosed. The control node comprises a receiving unit for receiving messages, a transmitting unit for transmitting messages, a processing unit for controlling further units and for processing messages and information. The receiving unit is adapted to receive from a device a service request comprising a device identifier. The processing unit is adapted to process the service request. The processing unit is further adapted to obtain a group profile comprising a group identifier identifying a plurality of devices. The processing unit is further adapted to select the group profile for serving the device, if the device identifier corresponds to the group identifier. The processing unit is further adapted to initiate, via the transmitting unit, the establishment of a connection based on the group profile in accordance with the service request.

The invention furthermore concerns a computer program loadable into a processing unit of an interface node to perform any of the steps of the aforementioned methods when operated at the interface node. The computer program can be stored on a computer readable medium. The computer-readable medium can be a permanent or rewritable memory within the interface node or located externally. The computer program can be also transferred to the control node for example via a cable or a wireless link as a sequence of signals.

In the following, detailed embodiments of the present invention shall be described in order to give the skilled person a full and complete understanding. However, these embodiments are illustrative and are not intended to be limiting.

### Brief description of the drawings

- Fig. 1: shows an exemplary arrangement of nodes in a GPRS network for providing access, comprising a serving GPRS support node (SGSN) according to an embodiment of the invention;
- Fig. 2a: shows a first sequence diagram depicting exemplary messages exchanged in the GPRS network of Fig. 1 according to a first exemplary embodiment of the invention;
- Fig. 2b: shows a second sequence diagram depicting exemplary messages exchanged in a GPRS network according to a second exemplary embodiment of the invention;
- Fig. 3: shows a flow diagram of exemplary steps performed by a control node of the arrangement of Fig. 1, Fig. 2a or Fig. 2b; and
- Fig. 4: shows an exemplary block diagram of the control node of Fig. 3.

### Detailed description

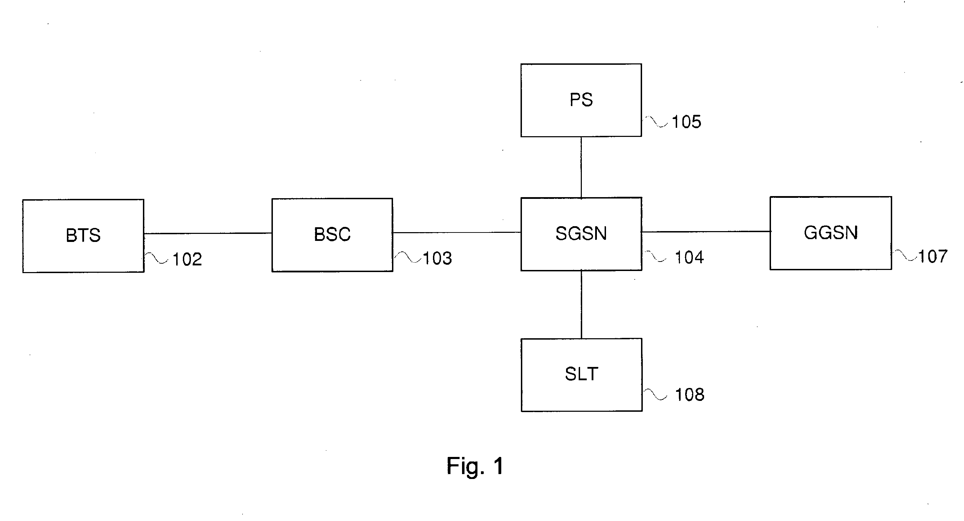

Fig. 1 depicts an arrangement in a GPRS network in an exemplary embodiment. Depicted are a base transceiver station BTS102, a base station controller BSC103, a serving GPRS support node SGSN104, a provisioning system PS105, a gateway GPRS support node GGSN107 and a SGSN selector function SLT108.

The serving GPRS support node SGSN104 handles all packet switched data within the network, e.g. the mobility management and authentication of the user terminals. The serving GPRS support node SGSN104 performs similar functions as the mobile switching center (not depicted) for voice traffic. The serving GPRS support node and the mobile switching center may be co-located or may share a subscriber register.

The serving GPRS support node SGSN104 is connected to the base station controller BSC1 03. The serving GPRS support node SGSN104 is the service access point to the GPRS network for the user. On the other side the serving GPRS support node SGSN104 relays the data to and from the relevant gateway GPRS support node. The serving GPRS support node SGSN104 handles the protocol adaptation between the Internet Protocol (IP) used in the backbone network and the sub-network-dependent convergence protocol (SNDCP) and logical link control (LLC) protocol used between the serving GPRS support node SGSN104 and the user terminals. These protocols handle compression and ciphering. The serving GPRS support node SGSN104 is also responsible for the authentication of GPRS user terminals. When the authentication is successful, the serving GPRS support node SGSN104 handles the registration of the user terminal to the GPRS network and takes care of its mobility management.

The gateway GPRS support node GGSN107 is responsible for the interworking between the GPRS network and external packet switched networks, like the Internet and X.25 networks. From the external networks' point of view, the gateway GPRS support node GGSN107 is a router to a sub-network, because it hides the GPRS infrastructure from the external network. When the gateway GPRS support node GGSN107 receives data addressed to a specific user terminal, it checks whether the user terminal is active by virtue of having a data session active through this GPRS support node. If this is the case, the gateway GPRS support node GGSN107 forwards the data to the SGSN serving the user terminal, but if the user terminal is inactive, the data are discarded, or the GGSN may initiate the establishment of a PDP Context from the device, as described further on for a service node using the SGSN selector function, enabling the GGSN to send the data to the device, via the SGSN. On the other hand, mobile-originated packets are routed to the right network by the gateway GPRS support node GGSN107. The gateway GPRS support node GGSN107 keeps a record of active user terminals and the SGSN the user terminals are attached to.

The base transceiver station BTS1 02 is responsible for the radio contact with a user terminal. It comprises an antenna and the radio equipment necessary to communicate by radio with the user terminal. Each base transceiver station in a telecommunications network covers a defined area, known as a cell. The base transceiver station BTS102 is under control of the base station controller BSC103, which is in turn under control of the serving GPRS support node SGSN104. The collection of cells failing under the control of a serving GPRS support node is known as the location area.

The base station controller BSC103 is in control of and supervises a number of base transceiver stations, of which only is depicted the base transceiver station BTS102. The base station controller BSC103 is responsible for the allocation of radio resources to a mobile call and for the handovers that are made between the base transceiver stations under its control, as well as for handovers that are made to a base transceiver station that is controlled by another base station controller.

The provisioning system PS105 is responsible for maintaining user information, such as user profiles. A user profile comprises a subscriber identifier, for example an International Mobile Subscriber Identity (IMSI), a device identifier of the user terminal associated to the user, for example an International Mobile Equipment Identity (IMEI), GPRS subscription data, and several indicators concerning access and charging. Usually the provisioning system PS1 02 provisions a subscriber database, such as the home location register (HLR), with user information.

The SGSN selector function SLT208 keeps a record of active user terminals, i.e. user terminals having an active data session, and an indication of the corresponding serving SGSN support node that is serving a user terminal. The SGSN selector function SLT108 may be interrogated for example by an application running on a service node in the GPRS network, when the application is to send data to the user terminal. The SGNS selector function SLT208 provides the service node with the indication of the serving SGSN support node.

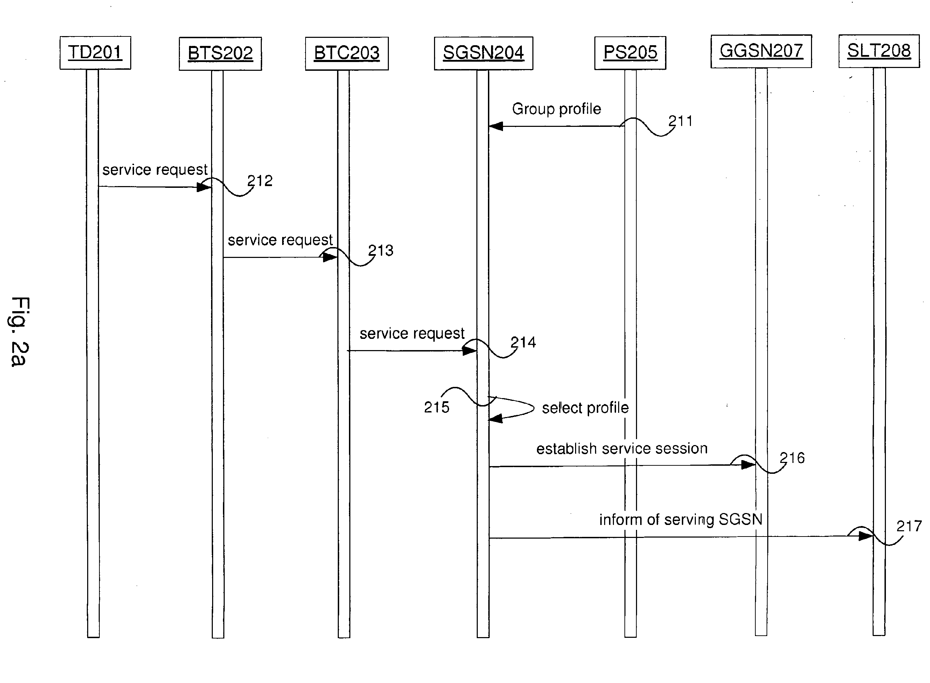

Fig. 2a depicts a sequence diagram showing messages exchanged in a GPRS network in a first exemplary embodiment. The sequence diagram provides exemplary messages that are exchanged between the nodes shown under Fig. 1. Shown in Fig. 2a are a device TD201 (not shown in Fig. 1) for example a user terminal or a telemetric device, a base transceiver station BTS202, a base station controller BSC203, a serving GPRS support node SGSN204, a provisioning system PS205, a gateway GPRS support node GGSN207 and a SGSN selector function SLT208.

The device TD201 can be any apparatus that is equipped with a GPRS communication capability such as a subscriber identity module (SIM) card and radio equipment to communicate by radio with the base transceiver station BTS202.

In step 211 the provisioning system PS205 sends a group profile to the serving GPRS support node SGSN204. The group profile is similar to a regular user profile, but applies to a group of devices instead of a single device. In order to identify the group of devices for which the group profile is applicable, the group profile comprises a subscriber identifier and a device identifier that are associated to the group of devices instead of a single device. For example, the subscriber identifier comprises an IMSI range and the device identifier comprises an IMEI range. The IMSI range is the common part of the individual IMSIs allocated to all devices in the group of devices. Similarly, the IMEI range is the common part of the individual IMEIs allocated to all devices in the group of devices. In the present embodiment the device DT201 is part of the group of devices. The group profile may further comprise a Packet Data Protocol (PDP) context profile valid for the group of devices. A PDP context is a data structure present on both the SGSN and the GGSN which contains the subscriber's data session information when the subscriber has an active data session. The serving GPRS support node SGSN204 may store the group profile in a local memory for later retrieval. The serving GPRS support node SGSN204 is hence provisioned with the group profile. This allows that any of the devices that are part of the group are registered at the serving GPRS support node SGSN204 for any future service data sessions.

In step 212 the device TD201 starting a session sends a message to the base transceiver station BTS202, thereby requesting a service within the session, e.g. a request for a PDP context activation. The service request sent by the device DT201 comprises its individual subscriber identity, e.g. its IMSI and its individual device identifier, e.g. its IMEI. According to a further embodiment, the service request comprises an indication of the location where the device TD201 resides. It is assumed in this embodiment that the device TD201 does not change location and hence the indication of the location is considered a fixed value. The device TD201 may for example send a location area identifier. A location area is an area within a GPRS network that is served by one specific serving GPRS support node. The location area is usually comprised of one or more cells. Alternatively, the device TD201 may send an indication of its geographic location, for example its geographic coordinates provided by a connected global positioning system (GPS) device. According to yet another embodiment, the indication of the location comprises the identifier of the cell wherein the device TD201 resides.

The base transceiver station BTS202 sends the service request to the base station controller BSC203 in step 213, for example it passes the PDP context establishment signaling transparently on to the base station controller BSC203. The base station controller BSC203 sends the service request to the serving GPRS support node SGSN204 in step 214. It may use the IMSI to select a suitable serving GPRS support node.

In step 215 the serving GPRS support node SGSN204 extracts the device identifier of device TD201 from the service request to authenticate the originator of the service request, i.e. the device TD201. According to this embodiment the serving GPRS support node searches in its local memory for a corresponding group profile having a matching device identifier, e.g. a group profile having an IMEI range matching the device identifier of device TD201. If found, the serving GPRS support node SGSN204 selects the group profile for further serving the device. As a result, the device TD201 is now attached to the network without the need of sending an explicit request for GPRS attach and the resulting signaling between the serving GPRS support node SGSN204 and the HLR and EIR (not depicted in Figure 2a) as is required according to the state of the art. The serving GPRS support node SGSN204 instructs the gateway GPRS support node GGSN207 to establish a service session according to the service request and the group profile in step 216. The gateway GPRS support node GGSN207 may continue the establishment of the service session in accordance with known techniques. For example it may activate a PDP context for the device TD201 and transmit data towards a service node (not depicted in Fig. 2a). Then the device TD201 has an active data session through the network. The indication of the location of the device TD201 may be sent to the service node for future service sessions initiated by the service node towards the device.

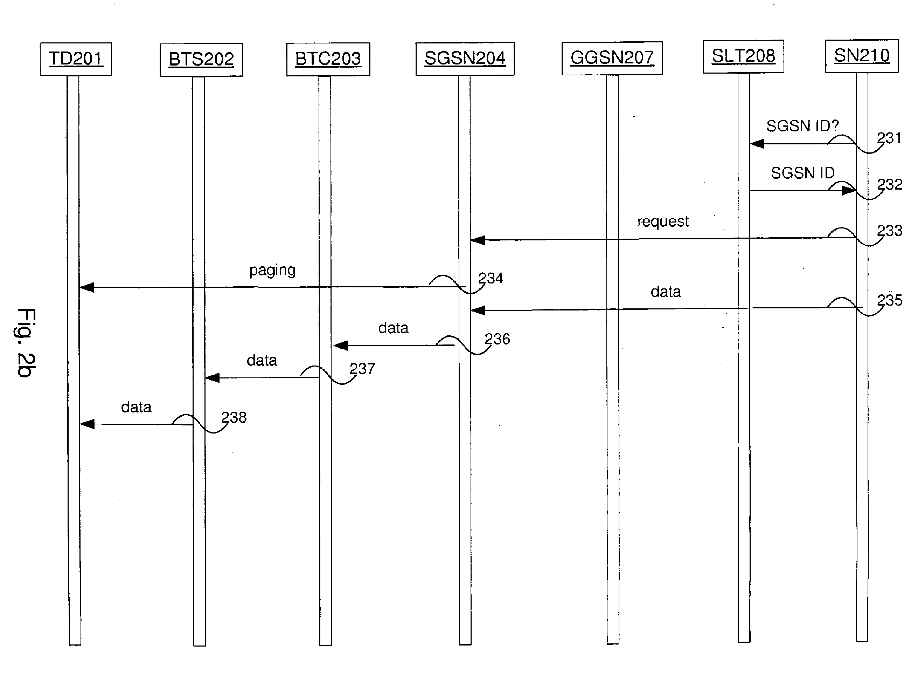

In step 217 the serving GPRS support node SGSN204 sends a message to the SGSN selector function SLT208 to inform it that the serving GPRS support node SGSN204 is serving the device TD201. The message may comprise an indication of the location of the device TD201. Any service node (not depicted in Fig. 2a) initiating a future service session towards the device TD201 is now able to identify the serving GPRS support node SGSN204 by querying the SGSN selector function SLT208. An exemplary embodiment of a service session initiated by a service node is provided with reference to Fig. 2b

The sequence diagram shown under Fig. 2b provides a similar arrangement of nodes in a telecommunications network to the arrangement of Fig. 2a, but in addition comprises a service node SN210. Furthermore, the provisioning system PS205 is no longer shown in the arrangement of Fig. 2b.

The service node SN210 can be any node of the telecommunications network that delivers services to end users or user terminals respectively, for example an application server. An application server is a server that hosts an API (Application Programming Interface) to expose services for use by other applications. In the example of telemetry, the service node SN210 may be a central control unit collecting measurement data from the telemetric device and sending instructions to the telemetric device.

According to the exemplary embodiment of Fig. 2b, the service node SN210 initiates a service session towards the device TD201 in step 231. For example the service node SN210 sends a request for PDP context establishment. According to this embodiment, the service node SN210 sends the request to the SGSN selector function SL208. The request comprises a subscriber identifier, a device identifier of the device TD201 and optionally an indication of the location of the device TD201. The indication of the location is known to the service node SN210 from a previous service session initiated by the device TD201 as explained with reference to Fig. 2a. The SGSN selector function SL208 maintains for each device an indication of the serving GPRS support node that is serving the device. For example it uses the indication of the location of the device to retrieve the corresponding serving GPRS support node.

In step 232 the SGSN selector function SL208 responds to the service node SN210 with an indication of the serving GPRS support node SN204.

In step 233 the service node SN210 sends the request for service session establishment to the serving GPRS support node SGSN204 as indicated in step 232, e.g. it sends a request for PDP context activation, by means of sending a Packet Data Unit (PDU) notification request, implying the request for paging the device for establishing a data session. The request comprises the device identifier and optionally the indication of the location of the device TD201.

The serving GPRS support node SGSN204 sends in step 234 a paging request to the indicated location of the device TD201 via the base station controller BSC203 and the base transceiver station BTS202. The paging request is further based on the device identifier of device TD201. Since the device TD201 can be assumed not to change location, the indication of the location may be the identifier of the exact cell where the device TD201 resides. This allows that the paging request can be restricted to the indicated cell. If the GPRS support node SGSN204 did not receive an indication of the location of the device TD201 in step 233, then it sends in step 234 the paging request to the entire location area served by the GPRS support node SGSN204 according to the prior art. Resulting from the paging request, the device TD201 will initiate the establishment of a PDP context, as described earlier.

In steps 235 to 238, the service node SN210 starts transmitting data towards the device TD201 via respectively the gateway GPRS support node GGSN207, the serving GPRS support node SGSN204, the base station controller BSC203 and the base transceiver station BTS202.

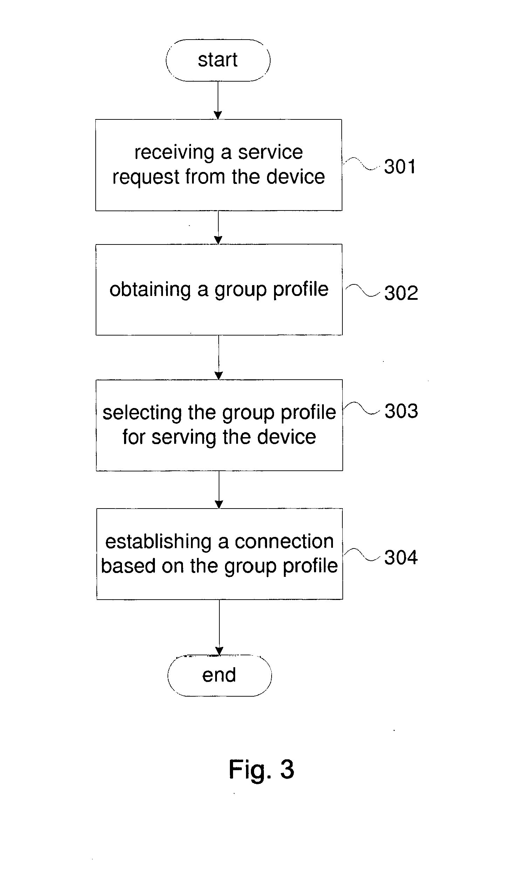

Fig. 3 depicts exemplary steps performed by the control node of Fig. 2a and 2b according to an embodiment of the invention.

In a first step 301 the control node receives from a device a service request. The service request comprises a device identifier.

In a second step 302 the control node obtains a group profile comprising a group identifier identifying a plurality of devices.

In a third step 303 the control nodes selects the group profile for serving the device, if the device identifier corresponds to the group identifier.

In a fourth step 304 the control node establishes a connection based on the group profile in accordance with the service request.

The method may end here or may continue with any of the steps described herein.

In an embodiment the step of selecting replaces a GPRS attach procedure for the device. This has the advantage that the signaling in the network resulting from a GPRS attach procedure is avoided.

In an embodiment the step of selecting is performed in response to the service request. This has the effect that the service request as such initiates providing access to the GPRS network, without having the need for sending a preceding request for a GPRS attach procedure from the device towards the network, lowering signaling between the device and the network.

In an embodiment the step of obtaining comprises receiving the group profile from a provisioning node.

In an embodiment the service request further comprises an indication of the location of the device. This has the advantage that the location of the device is known to the relevant nodes in the network such as a service node that initiates a future session towards the device. Knowing the location beforehand allows direct paging of the device without wasting resources on paging unnecessary cells. The device TD201 may for example send a location area identifier. Alternatively, the device TD201 may send an indication of its geographic location, for example its geographic coordinates provided by a connected global positioning system (GPS) device. According to yet another embodiment, the indication of the location comprises the identifier of the cell wherein the device TD201 resides.

In an embodiment the device comprises a telemetric device.

In an embodiment the control node comprises a Serving GPRS Support Node (SGSN).

In an embodiment the group profile is created at the provisioning node.

In an embodiment the service request comprises a request for Packet Data Protocol context activation.

In an embodiment the step of establishing a connection comprises activation of a Packet Data Protocol context.

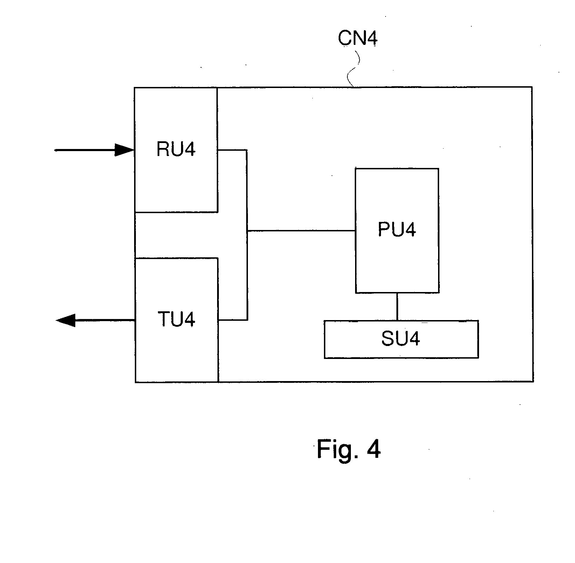

Fig. 4 depicts an embodiment of the control node SGSN204 of Fig. 3 comprising a receiving unit RU4 for receiving messages, a transmitting unit TU4 for transmitting messages, a processing unit PU4 for controlling further units and for processing messages and information, and preferably a storage unit SU4 for storing and/or obtaining of stored information.

The receiving unit RU4 may be adapted to receive from a device a service request comprising a device identifier. The processing unit PU4 may be adapted to process the service request. Furthermore the processing unit PU4 may be adapted to obtain a group profile comprising a group identifier identifying a plurality of devices. The processing unit PU4 may further be adapted to select the group profile for serving the device, if the device identifier corresponds to the group identifier. Further the processing unit PU4 may be adapted to initiate, via the transmitting unit TU4, the establishment of a connection based on the group profile in accordance with the service request.

In an embodiment the processing unit PU4 may be adapted to select the group profile instead of executing a GPRS attach procedure for the device.

In an embodiment the processing unit PU4 may be adapted to select the group profile in response to the service request.

In an embodiment the processing unit PU4 may be adapted to obtain the group profile from a provisioning node via the receiving unit RU4. The receiving unit RU4 may be adapted to receive the group profile from the provisioning node.

In an embodiment the service request further comprises an indication of the location of the device. The processing unit PU4 may be adapted to process the indication of the location of the device. In particular, the processing unit PU4 may be adapted to extract the indication of the location of the device from the service request.

In an embodiment the device comprises a telemetric device.

In an embodiment the control node comprises a Serving GPRS Support Node (SGSN).

In an embodiment the group profile is created at the provisioning node.

In an embodiment the service request comprises a request for Packet Data Protocol context activation.

In an embodiment the processing unit PU4 may be adapted to establish a connection by activating a Packet Data Protocol context.

## Claims

1. A method for providing a device (TD201), belonging to a group of devices having one single group profile, access to a General Packet Radio Service, GPRS, network, the GPRS network comprising a control node (SGSN204) for controlling the access, the control node (SGSN204) performing the steps of:
- obtaining (211) a group profile comprising a subscriber identifier and a device identifier, associated with a plurality of devices,
- receiving (214) a service request from the device (TD201), the service request comprising a device individual subscriber identity and individual device identifier,
- selecting (215) the group profile for attaching the device (TD201) to the GPRS network, if said individual device identifier corresponds to the device identifier in said group profile, and
- establishing (216) a connection based on the group profile in accordance with the service request.

2. The method according to claim 1, wherein the step of selecting is performed in response to receiving the service request.

3. The method according to any of the preceding claims, wherein the step of selecting replaces a GPRS attach procedure for the device (TD201).

4. The method according to any of the preceding claims, wherein the step of obtaining comprises receiving the group profile from a provisioning node (PS205).

5. The method according to any of the preceding claims, wherein the service request further comprises an indication of the location of the device (TD201).

6. The method according to any of the preceding claims, wherein the device (TD201) comprises a telemetric device.

7. The method according to any of the preceding claims, wherein the control node (SGSN204) comprises a Serving GPRS Support Node, SGSN.

8. The method according to any of the preceding claims, wherein the group profile is created at the provisioning node (PS205).

9. The method according to any of the preceding claims, wherein the service request comprises a request for Packet Data Protocol context activation.

10. The method according to any of the preceding claims, wherein the step of establishing a connection comprises activation of a Packet Data Protocol context.

11. A control node (SGSN204) comprising a receiving unit for receiving messages, a transmitting unit for transmitting messages, a processing unit for controlling further units and for processing messages and information, wherein
- the receiving unit is adapted to receive from a device (TD201) a service request comprising a device identifier,
- the processing unit is adapted to process the service request,
- the processing unit is further adapted to obtain a group profile comprising a group identifier identifying a plurality of devices,
- the processing unit is further adapted to select the group profile for serving the device (TD201), if the device identifier corresponds to the group identifier, and
- the processing unit is further adapted to initiate, via the transmitting unit, the establishment of a connection based on the group profile in accordance with the service request.

12. A computer program loadable into a processing unit of a control node (SGSN204), the computer program comprising portions of software code adapted to perform the steps of a method according to any of the claims 1 to 10.

13. A computer-readable medium product comprising a computer program according to claim 12.

## Patentansprüche

1. Verfahren zur Bereitstellung von Zugang zu einem GPRS (allgemeine paketvermittelten Funkdienste)-Netz für ein Gerät (TD201), das zu einer Gruppe von Geräten mit einem einzigen Gruppenprofil gehört, wobei das GPRS-Netz einen Steuerknoten (SGSN204) zum Steuern des Zugangs umfasst, und der Steuerknoten (SGSN204) die folgenden Schritte ausführt:
- Einholen (211) eines Gruppenprofils, das eine Teilnehmerkennung und eine Gerätekennung umfasst, die mit einer Mehrzahl von Geräten assoziiert sind,
- Empfangen (214) einer Dienstanforderung vom Gerät (TD201), wobei die Dienstanforderung eine geräteindividuelle Teilnehmerkennung und eine individuelle Gerätekennung umfasst,
- Auswählen (215) des Gruppenprofils zum verleihen eines Zugangs des Geräts (TD201) an das GPRS-Netz, wenn die individuelle Gerätekennung der Gerätekennung im Gruppenprofil entspricht, und
- Herstellen (216) einer Verbindung basierend auf dem Gruppenprofil gemäß der Dienstanforderung.

2. Verfahren nach Anspruch 1, wobei der Schritt des Auswählens als Reaktion auf den Empfang der Dienstanforderung ausgeführt wird.

3. Verfahren nach einem der vorhergehenden Ansprüche, wobei der Schritt des Auswählens eine GPRS-Zugangverleihungsprozedur für das Gerät (TD201) ersetzt.

4. Verfahren nach einem der vorhergehenden Ansprüche, wobei der Schritt des Einholens ein Empfangen des Gruppenprofils von einem Versorgungsknoten (PS205) umfasst.

5. Verfahren nach einem der vorhergehenden Ansprüche, wobei die Dienstanforderung ferner eine Anzeige des Aufenthaltsorts des Geräts (TD201) umfasst.

6. Verfahren nach einem der vorhergehenden Ansprüche, wobei das Gerät (TD201) ein telemetrisches Gerät umfasst.

7. Verfahren nach einem der vorhergehenden Ansprüche, wobei der Steuerknoten (SGSN204) einen versorgenden GPRS-Unterstützungsknoten, SGSN, umfasst.

8. Verfahren nach einem der vorhergehenden Ansprüche, wobei das Gruppenprofil an einem Versorgungsknoten (PS205) erstellt wird.

9. Verfahren nach einem der vorhergehenden Ansprüche, wobei die Dienstanforderung eine Anforderung für Paketdatenprotokoll-Kontextaktivierung umfasst.

10. Verfahren nach einem der vorhergehenden Ansprüche, wobei der Schritt des Herstellens einer Verbindung eine Aktivierung eines Paketdatenprotokoll-Kontextes umfasst.

11. Steuerknoten (SGSN204), umfassend eine Empfangseinheit zum Empfangen von Nachrichten, eine Sendeeinheit zum Senden von Nachrichten, eine Verarbeitungseinheit zum Steuern weiterer Einheiten und zum Verarbeiten von Nachrichten und Informationen, wobei
- die Empfangseinheit so ausgelegt ist, dass sie eine Dienstanforderung von einem Gerät (TD201) empfängt, die eine Gerätekennung umfasst,
- die Verarbeitungseinheit so ausgelegt ist, dass sie die Dienstanforderung verarbeitet,
- die Verarbeitungseinheit ferner so ausgelegt ist, dass sie ein Gruppenprofil einholt, das eine Gruppenkennung umfasst, die eine Mehrzahl von Geräten identifiziert,
- die Verarbeitungseinheit ferner so ausgelegt ist, dass sie das Gruppenprofil zum Versorgen des Geräts (TD201) auswählt, wenn die Gerätekennung der Gruppenkennung entspricht, und
- die Verarbeitungseinheit ferner so ausgelegt ist, dass sie über die Sendeeinheit die Herstellung einer Verbindung basierend auf dem Gruppenprofil gemäß der Dienstanforderung einleitet.

12. Computerprogramm, das in eine Verarbeitungseinheit eines Steuerknotens (SGSN204) geladen werden kann, wobei das Computerprogramm Abschnitte von Softwarecode umfasst, die so ausgelegt sind, dass sie die Schritte eines Verfahrens nach einem der Ansprüche 1 bis 10 ausführen.

13. Computerlesbares Medienprodukt, umfassend ein Computerprogramm nach Anspruch 12.

## Revendications

1. Procédé pour donner accès à un dispositif (TD201), appartenant à un groupe de dispositifs ayant un profil de groupe unique, à un réseau GPRS (General Packet Radio Service), le réseau GPRS comprenant un noeud de commande (SGSN204) pour commander l'accès, le noeud de commande (SGSN204) effectuant les étapes consistant à :
- obtenir (211) un profil de groupe comprenant un identifiant d'abonné et un identifiant de dispositif, associé à une pluralité de dispositifs,
- recevoir (214) une demande de service émanant du dispositif (TD201), la demande de service comprenant une identité d'abonné individuel de dispositif et un identifiant de dispositif individuel,
- sélectionner (215) le profil de groupe pour rattacher le dispositif (TD201) au réseau GPRS, si ledit identifiant de dispositif individuel correspond à l'identifiant de dispositif dans ledit profil de groupe, et
- établir (216) une connexion sur la base du profil de groupe conformément à la demande de service.

2. Procédé selon la revendication 1, dans lequel l'étape de sélection est effectuée en réponse à la réception de la demande de service.

3. Procédé selon une quelconque des revendications précédentes, dans lequel l'étape de sélection remplace une procédure de rattachement GPRS pour le dispositif (TD201).

4. Procédé selon une quelconque des revendications précédentes, dans lequel l'étape d'obtention comprend de recevoir le profil de groupe depuis un noeud de provisionnement (PS205).

5. Procédé selon une quelconque des revendications précédentes, dans lequel la demande de service comprend en outre une indication de la localisation du dispositif (TD201).

6. Procédé selon une quelconque des revendications précédentes, dans lequel le dispositif (TD201) comprend un dispositif télémétrique.

7. Procédé selon une quelconque des revendications précédentes, dans lequel le noeud de commande (SGSN204) comprend un noeud de prise en charge GPRS de desserte, SGSN.

8. Procédé selon une quelconque des revendications précédentes, dans lequel le profil de groupe est créé au niveau du noeud de provisionnement (PS205).

9. Procédé selon un quelconque des revendications précédentes, dans lequel la demande de service comprend une demande d'activation de contexte de protocole de données en paquets (PDP).

10. Procédé selon une quelconque des revendications précédentes, dans lequel l'étape d'établissement d'une connexion comprend l'activation d'un contexte de protocole de données en paquets.

11. Noeud de commande (SGSN204) comprenant une unité de réception pour recevoir des messages, une unité de transmission pour transmettre des messages, une unité de traitement pour commander d'autres unités et à des fins de traitement des messages et informations, dans lequel :
- l'unité de réception est adaptée afin de recevoir depuis un dispositif (TD201) une demande de service comprenant un identifiant de service,
- l'unité de traitement est adaptée afin de traiter la demande de service,
- l'unité de traitement est en outre adaptée afin d'obtenir un profil de groupe comprenant un identifiant de groupe identifiant une pluralité de dispositifs,
- l'unité de traitement est en outre adaptée afin de sélectionner le profil de groupe pour desservir le dispositif (TD201), si l'identifiant de service correspond à l'identifiant de groupe, et
- l'unité de traitement est en outre adaptée afin d'amorcer, via l'unité de transmission, l'établissement d'une connexion sur la base du profil de groupe conformément à la demande de service.

12. Programme informatique chargeable dans une unité de traitement d'un noeud de commande (SGSN204), le programme informatique comprenant des portions de code logiciel adaptées afin d'exécuter les étapes d'un procédé selon une quelconque des revendications 1 à 10.

13. Support lisible par ordinateur comprenant un programme informatique selon la revendication 12.
